# EUROPEAN PATENT APPLICATION

(11) **EP 4 418 212 A1**
(43) Date of publication of application: **21.08.2024**
(21) Application number: 23156474.1
(22) Date of filing: 14.02.2023
(51) Int. Cl.: G06T 11/00

(54) **COMPUTER-IMPLEMENTED METHOD FOR GENERATING AT LEAST ONE TRANSLATED DATA ITEM**

(71) Applicant: Siemens Mobility GmbH, 81739 München (DE)
(72) Inventor: WU, Zhiliang, 81379 München (DE); YANG, Yinchong, 85579 Neubiberg (DE)
(74) Representative: Siemens Patent Attorneys

(57) **Abstract**

The invention relates to a computer-implemented method for generating at least one translated data item, comprising the steps: a. Providing at least one data item (S1); b. Providing at least one attribute item (S2); c. Generating the at least one translated data item based on the at least one data item and the at least one attribute item using an image-to-image translation (S3); and d. Providing the at least one translated data item (S4).

Further, the invention relates to a corresponding computer program product and system.

## Description

Independent of the grammatical term usage, individuals with male, female or other gender identities are included within the term.

### 1. Technical field

The present invention relates to a computer-implemented method for generating at least one translated data item. Further, the invention relates to a corresponding computer program product and technical system.

### 2. Prior art

Autonomous driving gains in importance. Diverse autonomous vehicles, such as cars and trains are known from the prior art in this context. The autonomous vehicles are configured to operate in an autonomous mode, according to which the vehicle navigates through an environment with little or no input from a driver. Most often, the autonomous vehicles are configured to operate driverless, they are hence self-driving.

Such an autonomous vehicle typically comprises one or more sensors, that are configured to sense information about their environment. Moreover, the autonomous vehicle uses one or more safety-critical applications for diverse functions, such as navigation through the environment. For example, if the sensor senses that the autonomous vehicle approaches an obstacle, the autonomous vehicle will automatically navigate around the obstacle by means of the safety-critical application. Exemplary safety-critical functions are e.g. steering, accelerating and braking.

To date, however, it remains a challenge to prevent unexpected consequences, such as accidents caused by the autonomous vehicles. For example, the obstacle is a human person and is not detected in a timely manner or the navigation does not work properly. Thus, severe accidents can be caused by the autonomous vehicle e.g. due to a malfunction of the underlying safety-critical application. In the worst case, the affected human person is severely injured by the approaching autonomous vehicle. In other words, the human-machine interaction is affected leading to human injuries.

Another example is directed to industrial plants. The increasing degree of automation allows for manufacturing or industrial installation of products in a production line of the industrial plant to be performed by robot units or other autonomous units in an automatic manner and thus efficiently at least in part up to now. The malfunction of the safety-critical application running on the robot unit often has a negative impact on the industrial plant and can lead to a fall out of the associated robot unit in the manufacturing process. This disadvantageously results in downtimes of the industrial plant and tremendous costs.

Moreover, machine learning is well known from the prior art in context of Artificial Intelligence ("AI"). According to which, the Artificial Intelligence systems are software programs whose behavior is learned from data instead of being explicitly programmed. The learning process is called "training" which requires plenty of data and significant computational resources. Thereby, the trained machine learning model solves a specific task for which it was trained, such as classification. In other words, the trained machine learning models are configured to classify the data elements.

The behavior of the AI model must be tested and validated before being deployed, especially for safety-critical applications. Thereby, these tests have to cover as many situations as possible. The definition and the collection of these test scenarios, up to now, remains a challenging task. This becomes even more challenging considering that the AI model is data-driven in the sense that if certain rare scenarios are under-represented in the training set, it is difficult for the AI model to achieve a reliable performance.

According to prior art, however, the known approaches are inadequate to overcome these limitations.

The manual collection of test scenarios is the most straightforward and reliable approach, but also the most expensive and sometimes impossible one. For instance, imagine how long one has to wait for hail just to make a video recording in a vehicle. It is also impossible to deliberately capture the test scenario with pedestrian right in front of a driving vehicle. For these unlikely and extremely dangerous test scenarios, artificial processing of existing data becomes important.

Image processing or simply "Photoshopping" known from the prior art involves manipulating the image or video data to create a test scenario difficult to capture naturally. For instance, pedestrians can be cut and paste in front of a driving car (from the driver's view) to simulate a dangerous test scenario. Moreover, the pixels can be blend in a windshield area with an image of raindrops or hails to simulate the weather conditions. This prior art approach allows to compensate the extreme rare conditions, but requires a lot of manual work. It has to be ensured manually that e.g. the pedestrians are pasted with the right scale, which becomes more complicated if one attempts to manipulate a whole sequence of video.

The images created using deep generative models may look realistic at first glance, but often show certain artifacts that are unlikely in reality. Therefore, it is difficult to justify what influence these artifacts may have on the AI model being tested.

It is therefore an objective of the invention to provide a computer-implemented method for generating at least one translated data item, which is more efficient and more reliable.

### 3. Summary of the invention

This problem is according to one aspect of the invention solved by a computer-implemented method for generating at least one translated data item, comprising the steps:
a. Providing at least one data item;
b. Providing at least one attribute item;
c. Generating the at least one translated data item based on the at least one data item and the at least one attribute item using an image-to-image translation; and
d. Providing the at least one translated data item.

Accordingly, the invention is directed to a computer-implemented method for generating at least one translated data item.

First, the input data is provided, namely the data item and the attribute item. Then, the data item is translated into the translated data item based on the input data. Therefore, the image-to-image translation is utilized. The translated data item is provided as output data.

In other words, the translated data item is generated via manipulating the original data item based on the attribute item. Thanks to the attribute item, the translated item is more likely to occur in reality compared to prior art.

Thereby, the term image-to-image translation encompasses image-to-image translation techniques, image-to-image methods or image-to-image algorithms, including e.g. stable diffusion models.

According to an embodiment one data item and one attribute item as pair is used as input data. Additionally or alternatively, one or more data items and one or more attribute items can be used as input data.

The input data can be received and/or transmitted via one or more interfaces of a technical unit, wherein the technical unit can be designed as any computing unit. Additionally or alternatively, the output data can be sent or transmitted via one or more interfaces of a technical unit.

The advantage is that the translated data items can be used as input in the form of training data for machine learning. In other words, the training data comprises the translated data items, and hence is significantly improved.

As mentioned further above, the training data advantageously has relatively fewer artifacts compared to prior art. These artifacts, according to prior art, often have an uncertain impact on the AI model being tested. Hence, it is circumvented that these artifacts have an influence on the AI model being tested. Any negative impacts by artifacts are prevented.

Moreover, the present invention ensures that the required and even rare test scenarios are sufficiently represented in the training data. This way, the AI model can be trained based on the training data in an efficient and reliable manner, with good performance.

In an aspect the at least one data item and/or the at least one attribute item is at least one sample; wherein the sample is an item which is sampled using a sampling strategy. Accordingly, the items can be sampled. The sampling has proven to be advantageous since it increases the diversity of the possible scenario combinations. Sampling is even more advanced by sampling multiple attribute items.

In a further aspect the at least one data item is an image item or a video item. Accordingly, the data items can be selected in a flexible manner according to the specific application e.g. safety-critical application such as autonomous driving, the underlying technical system, the use case, the user requirement and/or any other conditions.

In a further aspect the at least one data item is stored in a volatile or a non-volatile storage unit. Accordingly, the data items are stored in a storage unit in a reliable manner, thereby preventing any data loss. The storage unit can be flexibly selected, including e.g. database and cloud. Additionally, any other data, such as attribute items, can also be stored in the same storage unit and/or any other separate storage unit.

In a further aspect the at least one attribute item is at least one operational design domain, ODD, attribute item.

In a further aspect the at least one attribute item is a plurality of attribute items or at least one processed attribute item.

In a further aspect the at least one processed attribute item is at least one text with regard to the plurality of attribute items, wherein the at least one text preferably corresponds to a syntax.

Accordingly, the one or more attribute items can be unprocessed e.g. in the form of the ODD attributes. Alternatively, the one or more unprocessed or original attribute items can be processed into one or more processed attribute items. A plurality of unprocessed or original data items can be processed into one text, preferably free text. In other words, the attribute items are combined into a text. Moreover, the text preferably corresponds to the syntax.

In a further aspect the image-to image translation is a text-guided image-to-image adaptation or a mask-based image inpainting. Moreover, the input data can be extended with a mask, e.g. in the image. Thereby, the mask is a black and white image with the same size as the original image. The image inpainting would only appear in the white region. The mask-based image inpainting offers more control of the image translation according to the attribute item. It is more suitable for use cases like pixel-level classification.

In a further aspect, the method further comprises
- Outputting the at least one data item, the at least one translated data item and/or the at least one attribute item;
- Storing the at least one data item, the at least one translated data item and/or the at least one attribute item in storage unit;
- Displaying the at least one data item, the at least one translated data item and/or the at least one attribute item using a display unit;
- Transmitting the at least one data item, the at least one translated data item and/or the at least one attribute item to a computing unit by means of an interface; and/or
- Evaluating the at least one data item, the at least one translated data item and/or the at least one attribute item.

In a further aspect the, the method further comprises
- Training and/or validating a machine-learning model based on the at least one translated data item, wherein the machine-learning model is preferably an artificial intelligence, AI, model.

Accordingly, the input data, data of intermediate method steps and/or resulting output data in the form of the translated data item can be further handled. Therefore, the method according to an embodiment comprises one or more method steps.

This way, the method steps can be flexibly selected and triggered in an efficient manner. The selection of the steps can depend on criteria, such as safety-critical application, use case and/or user requirement etc. Moreover, any of the aforementioned method steps can be performed by one or more computing units of the technical system. The method steps can be performed gradually or simultaneously. The method steps include e.g. storing and processing steps. The advantage is that appropriate steps can be taken in a timely manner.

For example, the translated data item can be simply output and/or displayed to a user by means of a display unit. The translated data item can be extended with further information.

According to an embodiment, the translated data item is used as input for machine learning for training and/or validating the machine learning model, preferably in context of safety-critical applications such as autonomous vehicles, industrial plants or robot units.

According to an exemplary use case, the AI model is used for an autonomous vehicle, which is configured for objected detection. The attribute items can be weather conditions and/or lighting conditions. The data items can be original image or video items of some scenarios in context of object detection. The translated data item is the output of the aforementioned method. This output serves then as input for the AI model. Hence, the input data, namely the training data, which is essential for training the AI models, is significantly improved, including the quality of the training data. This also results in an improved autonomous driving and objected detection. An other exemplary use case is the improvement of lighting conditions or of the factory set up of industrial plants.

A further aspect of the invention is a computer program product directly loadable into an internal memory of a computer, comprising software code portions for performing the steps according to any one of the preceding claims when said computer program product is running on a computer.

A further aspect of the invention is a technical system for performing the aforementioned computer-implemented method.

### 4. Short description of the drawings

In the following detailed description, presently preferred embodiments of the invention are further described with reference to the following figures:
- Fig. 1: illustrates a flowchart of the computer-implemented method according to the invention.
- Fig. 2: illustrates a schematic diagram of the computer-implemented method according to an embodiment.
- Fig. 3: shows diverse image-to image translation techniques in comparison according to an embodiment.

### 5. Detailed description of preferred embodiments

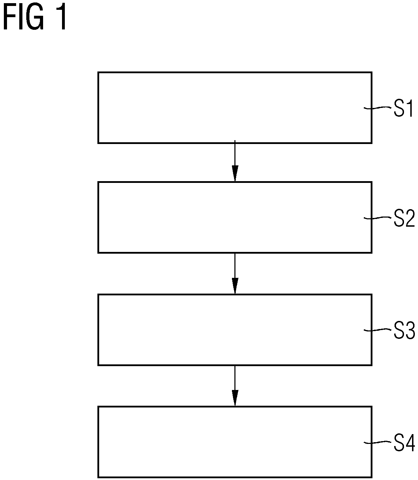

Figure 1 illustrates a flowchart of the computer-implemented method according to the invention. In the first step S1, the at least one data item is provided. In the second step S2, the at least one attribute item is provided. In the next step S3, the at least one translated data item is generated based on the at least one data item and the at least one attribute item using an image-to-image translation. In the last step S4, the at least one translated data item is provided.

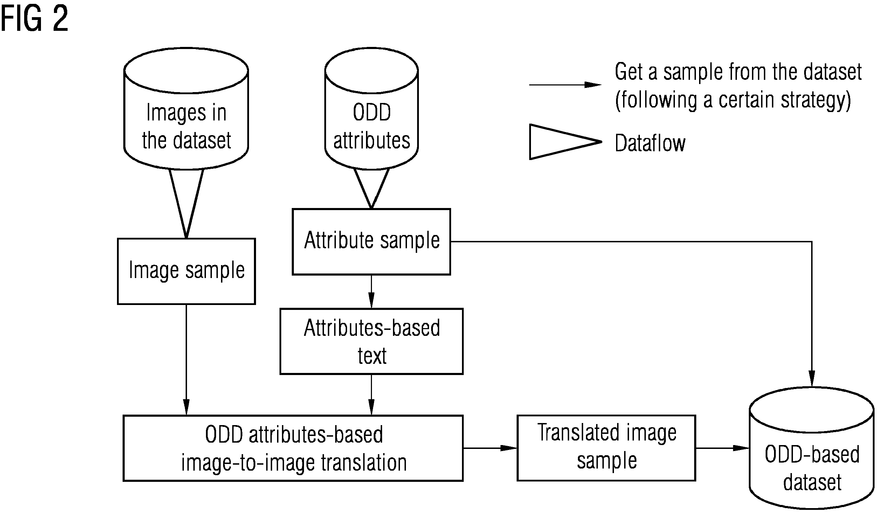

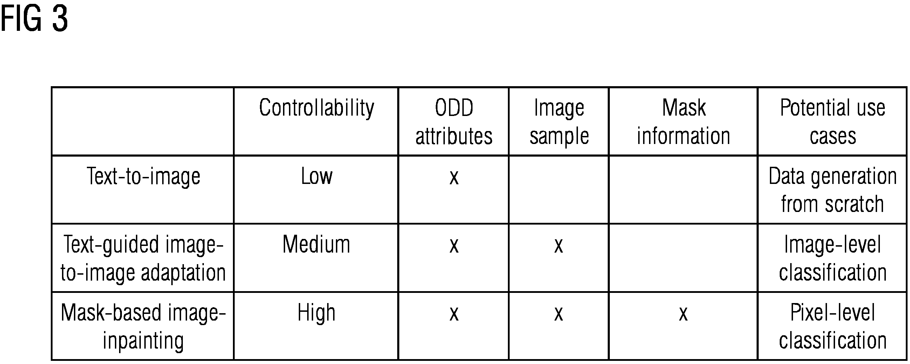

According to an embodiment, and as shown in Figure 2, the image and ODD attribute samples from the dataset and ODD attributes following a predefined sampling strategy are provided. The image and the ODD attributes can be sampled. The sampling strategy can be a sampler, e.g., following a uniform distribution over all images and/or attributes. The distribution can be adjusted accordingly to lay more emphasis on certain ODD attributes. The ODD attributes can further be combined into one free text, e.g., according to some syntax. In its simplest form, all the sampled ODD attributes can be combined into one free text. The image sample and the attributes-based text pair is fed as input into the image-to-image translation to get a translated image sample. Therefore, distinct image-to-image translation techniques can be utilized, which are summarized in Figure 3. The ODD attributes and the translated image sample pairs can be saved in an ODD-based dataset, which can then be used both for training and validating machine learning models. As an alternative to images, videos can be used as a sequence of consecutive images.

As shown in the Table according to Figure 3, the stable diffusion models offer a text-based image generation capability ranging from text-to-image to mask-based image inpainting.

The text-to-image offers the lowest controllability since the generated data cannot be used directly and requires extra annotation processes. This is only suitable for use cases when one hasn't collected any data, or when the operational domains have not been fully specified yet.

The text-guided image-to-image adaptation delivers results with much fewer extra annotation efforts. More specifically, the text-guided image-to-image adaptation is capable to adapt an image sample according to the ODD. The targets of interests (such as the labels and segmentations) are advantageously unchanged since solely the test scenario around them is adapted. The text-guided image-to-image adaptation is suitable for datasets defined for image level classification tasks, such as object classification.

Furthermore, the mask-based image inpainting uses one more additional input data items, such as the mask information. The advantage is that the translation affects applies only on unmasked areas. Thus, the image-to-image translation effects are further restricted, but the ground-truth value is kept. Therefore, it is suitable for datasets defined with pixel-level classification tasks, such as image segmentation.

## Claims

1. Computer-implemented method for generating at least one translated data item, comprising the steps:
a. Providing at least one data item (S1);
b. Providing at least one attribute item (S2);
c. Generating the at least one translated data item based on the at least one data item and the at least one attribute item using an image-to-image translation (S3); and
d. Providing the at least one translated data item (S4) .

2. Computer-implemented method according to claim 1,
wherein the at least one data item and/or the at least one attribute item is at least one sample; wherein
the sample is an item which is sampled using a sampling strategy.

3. Computer-implemented method according to claim 1 or claim 2, wherein the at least one data item is an image item or a video item.

4. Computer-implemented method according to any of the preceding claims, wherein the at least one data item is stored in a in a volatile or a non-volatile storage unit.

5. Computer-implemented method according to any of the preceding claims, wherein the at least one attribute item is at least one operational design domain, ODD, attribute item.

6. Computer-implemented method according to any of the preceding claims, wherein the at least one attribute item is a plurality of attribute items or at least one processed attribute item.

7. Computer-implemented method according to claim 6,
wherein the at least one processed attribute item is at least one text with regard to the plurality of attribute items, wherein the at least one text preferably corresponds to a syntax.

8. Computer-implemented method according to any of the preceding claims, wherein the image-to image translation is a text-guided image-to-image adaptation or a mask-based image inpainting.

9. Computer-implemented method according to any of the preceding claims, further comprising
- Outputting the at least one data item, the at least one translated data item and/or the at least one attribute item;
- Storing the at least one data item, the at least one translated data item and/or the at least one attribute item in storage unit;
- Displaying the at least one data item, the at least one translated data item and/or the at least one attribute item using a display unit;
- Transmitting the at least one data item, the at least one translated data item and/or the at least one attribute item to a computing unit by means of an interface; and/or
- Evaluating the at least one data item, the at least one translated data item and/or the at least one attribute item.

10. Computer-implemented method according to any of the preceding claims, further comprising
- Training and/or validating a machine-learning model based on the at least one translated data item, wherein the machine-learning model is preferably an artificial intelligence, AI, model.

11. A computer program product directly loadable into an internal memory of a computer, comprising software code portions for performing the steps according to any one of the preceding claims when said computer program product is running on a computer.

12. Technical system for performing the method according to claims 1 - 10.
